# FASCICULE DE BREVET EUROPEEN

(11) **EP 4 164 904 B1**
(45) Date de publication et mention de la délivrance du brevet: **18.02.2026**
(21) Numéro de dépôt: 21733788.0
(22) Date de dépôt: 16.06.2021
(51) Int. Cl.: B60H 1/00, B60H 1/32, F24F 13/30, F04D 17/04, F25B 6/04, F25B 5/02, F25B 25/00, F25B 40/02

(54) **MODULE DE REFROIDISSEMENT POUR VÉHICULE AUTOMOBILE ÉLECTRIQUE OU HYBRIDE À TURBOMACHINE TANGENTIELLE**
KÜHLMODUL FÜR EIN ELEKTRO- ODER HYBRIDKRAFTFAHRZEUG MIT EINER TANGENTIALFLUSSTURBOMASCHINE
COOLING MODULE FOR AN ELECTRIC OR HYBRID MOTOR VEHICLE, COMPRISING A TANGENTIAL-FLOW TURBOMACHINE

(30) Priorité: 16.06.2020 FR 2006282
(43) Date de publication de la demande: 19.04.2023
(73) Titulaire: VALEO SYSTEMES THERMIQUES, 78320 Le Mesnil Saint-Denis (FR)
(72) Inventeur: DURBECQ, Gael, 78322 Le Mesnil-Saint-Denis CEDEX (FR); MAMMERI, Amrid, 78322 Le Mesnil-Saint-Denis CEDEX (FR); ETIENNE, Erwan, 78322 Le Mesnil-Saint-Denis CEDEX (FR); AZZOUZ, Kamel, 78322 Le Mesnil-Saint-Denis CEDEX (FR)
(74) Mandataire: Valeo Powertrain Systems
(86) Numéro de dépôt international: PCT/EP2021/066259
(87) Numéro de publication internationale: WO 2021/255103

(56) Documents cités:
- DE-A1- 10 226 851
- DE-A1- 102018 218 264
- FR-A1- 3 028 016
- JP-A- H11 321 346

## Description

La présente invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Le dispositif de ventilation permet ainsi, par exemple, de générer un flux d'air au contact de l'échangeur de chaleur, quand le véhicule est à l'arrêt ou à faible vitesse de roulage. Dans les véhicules automobiles à moteur thermique classique, le au moins un échangeur de chaleur est de forme sensiblement carrée, le dispositif de ventilation étant alors un ventilateur à hélice dont le diamètre est sensiblement égal au côté du carré formé par l'échangeur de chaleur.

Un module de refroidissement d'un type connu est divulgué par JP H11 321346 A et par FR 3 028 016 A1. Classiquement, l'échangeur de chaleur est alors placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement situé dans le passage du flux d'air traversant la baie de refroidissement supérieure.

Cependant, les véhicules électriques sont de préférence munis uniquement de baies de refroidissement situées sous le pare-chocs, de préférence encore d'une unique baie de refroidissement située sous le pare-chocs.

En effet, le moteur électrique n'a pas besoin d'être alimenté en air. Et la diminution du nombre de baies de refroidissement et de leur taille permet d'améliorer les caractéristiques aérodynamiques du véhicule électrique. Ceci se traduit également par une meilleure autonomie et une plus grande vitesse de pointe du véhicule automobile. Ainsi, selon les exigences des constructeurs, pour des véhicules électriques et hybrides, notamment afin d'améliorer le coefficient de pénétration dans l'air, la hauteur des échangeurs de chaleur présents dans ces baies de refroidissement est amenée à diminuer et leur épaisseur à augmenter.

Cependant, l'empilement des échangeurs de chaleurs dans le sens du flux d'air les traversant implique que chaque échangeur de chaleur disposé en amont impact les performances du ou des échangeurs placés en aval.

Le but de la présente invention est donc de remédier au moins partiellement aux inconvénients de l'art antérieur et de proposer module de refroidissement amélioré permettant des performances les meilleurs possibles pour les différents échangeurs de chaleurs.

La présente invention concerne donc un module de refroidissement pour véhicule automobile électrique ou hybride, ledit module de refroidissement étant destiné à être traversé par un flux d'air et comportant :
un ensemble d'échangeurs de chaleur comportant :
un premier échangeur de chaleur configuré pour être un condenseur connecté au sein d'un circuit de climatisation, et
un deuxième échangeur de chaleur configuré pour être un radiateur basse température connecté au sein d'un circuit de gestion thermique,
une turbomachine tangentielle configurée de sorte à générer le flux d'air,
l'ensemble d'échangeurs de chaleur comportant en outre un troisième échangeur de chaleur configuré pour être un sous-refroidisseur connecté au sein du circuit de climatisation, ledit troisième échangeur de chaleur étant disposé au sein de l'ensemble d'échangeurs de chaleur le plus en amont dans le sens du flux d'air, le deuxième échangeur de chaleur étant disposé en amont du premier échangeur de chaleur dans le flux d'air au sein de l'ensemble d'échangeurs de chaleur, le deuxième échangeur de chaleur et le troisième échangeur de chaleur étant disposés sur un même plan au sein de l'ensemble d'échangeurs de chaleur.

Selon un autre aspect de l'invention, le troisième échangeur de chaleur est disposé sous le deuxième échangeur de chaleur.

Selon un autre aspect de l'invention, le troisième échangeur de chaleur est configuré pour permettre au moins une passe d'un fluide réfrigérant circulant dans le circuit de climatisation, le fluide réfrigérant circulant dans ladite passe circulant à contre-courant par rapport à dans une passe, disposée en vis à vis, au sein du premier échangeur de chaleur.

Selon un autre aspect de l'invention, le troisième échangeur de chaleur est configuré pour permettre au moins une passe d'un fluide réfrigérant circulant dans le circuit de climatisation, le fluide réfrigérant circulant dans ladite passe dans le même sens que dans une passe, disposée en vis à vis, au sein du premier échangeur de chaleur.

Selon un autre aspect de l'invention, l'ensemble d'échangeurs de chaleur comporte un quatrième échangeur de chaleur configuré pour être un radiateur basse température et disposé en aval du premier échangeur de chaleur dans le flux d'air.

Selon un autre aspect de l'invention, quatrième échangeur de chaleur est connecté au circuit de gestion thermique en parallèle du deuxième échangeur de chaleur.

Selon un autre aspect de l'invention, le quatrième échangeur de chaleur est connecté à un circuit de gestion thermique annexe distinct du circuit de gestion thermique auquel est connecté le deuxième échangeur de chaleur.

Selon un autre aspect de l'invention, le module de refroidissement comporte une bouteille déshydratante, ladite bouteille déshydratante étant connectée au sein du circuit de climatisation en aval du premier échangeur de chaleur, entre ledit premier échangeur de chaleur et le troisième échangeur de chaleur, dans le sens de circulation d'un fluide réfrigérant circulant dans ledit circuit de climatisation.

Selon un autre aspect de l'invention, la bouteille déshydratante est disposée sur un même plan que le troisième échangeur de chaleur au sein de l'ensemble d'échangeurs de chaleur. Selon un autre aspect de l'invention, la bouteille déshydratante est disposée sous le troisième échangeur de chaleur.

Selon un autre aspect de l'invention, le module de refroidissement comporte un premier boîtier collecteur disposé en aval de l'ensemble d'échangeurs de chaleur dans le sens de circulation du flux d'air et la bouteille déshydratante est disposée en aval de l'ensemble d'échangeurs de chaleur au sein dudit premier boîtier collecteur.

Selon un autre aspect de l'invention, le module de refroidissement comporte un premier boîtier collecteur disposé en aval de l'ensemble d'échangeurs de chaleur dans le sens de circulation du flux d'air et la bouteille déshydratante est disposée en aval de l'ensemble d'échangeurs de chaleur à l'extérieur dudit premier boîtier collecteur.

Selon un autre aspect de l'invention, la bouteille déshydratante est disposée dans la partie basse du premier boîtier collecteur.

Selon un autre aspect de l'invention, l'axe d'élongation de la bouteille déshydratante est disposé parallèlement au plan des échangeurs de chaleur de l'ensemble d'échangeurs de chaleur.

Selon un autre aspect de l'invention, la bouteille déshydratante est disposée de sorte que son axe d'élongation soit perpendiculaire à l'axe de la hauteur des échangeurs de chaleur de l'ensemble d'échangeurs de chaleur.

Selon un autre aspect de l'invention, la bouteille déshydratante est disposée de sorte que son axe d'élongation soit sensiblement sur le même plan que la surface de l'échangeur de chaleur.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique de l'avant d'un véhicule automobile en vue de côté,
[Fig 2] la figure 2 montre une représentation schématique en perspective et en coupe partielle de l'avant d'un véhicule automobile et d'un module de refroidissement,
[Fig 3] la figure 3 montre une représentation schématique de circuits de gestion thermique, [Fig 4] la figure 4 montre une représentation schématique en perspective semi-transparente d'un module de refroidissement selon un premier mode de réalisation,
[Fig 5] la figure 5 montre une représentation schématique en perspective semi-transparente d'un module de refroidissement selon un deuxième mode de réalisation,
[Fig 6] la figure 6 montre une représentation schématique en perspective semi-transparente d'un module de refroidissement selon un troisième mode de réalisation,
[Fig 7] la figure 7 montre une représentation schématique en perspective d'un empilement de deux échangeurs de chaleur selon une première variante,
[Fig 8] la figure 8 montre une représentation schématique en perspective d'un empilement de deux échangeurs de chaleur selon une deuxième variante,
[Fig 9] la figure 9 montre une représentation schématique en perspective semi-transparente d'un module de refroidissement selon un quatrième mode de réalisation, ne faisant pas partie de l'invention,
[Fig 10] la figure 10 montre une représentation schématique en perspective semi-transparente d'un module de refroidissement selon un cinquième mode de réalisation, ne faisant pas partie d'invention,
[Fig 11] la figure 11 montre une représentation schématique en perspective semi-transparente d'un module de refroidissement selon un sixième mode de réalisation, ne faisant pas partie de l'invention,
[Fig 12] la figure 12 montre une représentation schématique en perspective d'un empilement de deux échangeurs de chaleur selon une troisième variante ne faisant pas partie de l'invention.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un flux d'air. A contrario, on entend par « placé en aval » qu'un élément est placé après un autre par rapport au sens de circulation du flux d'air.

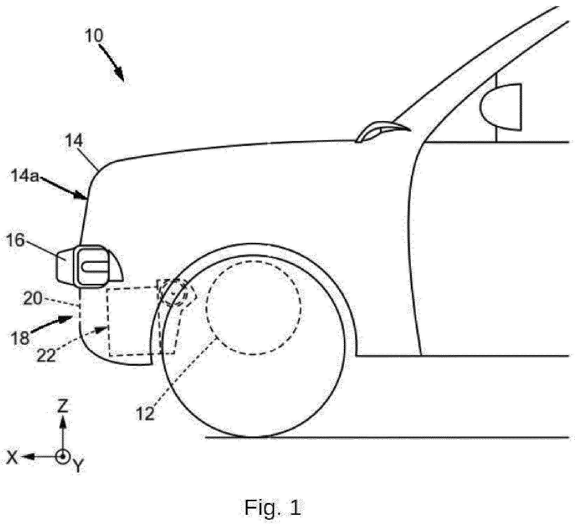

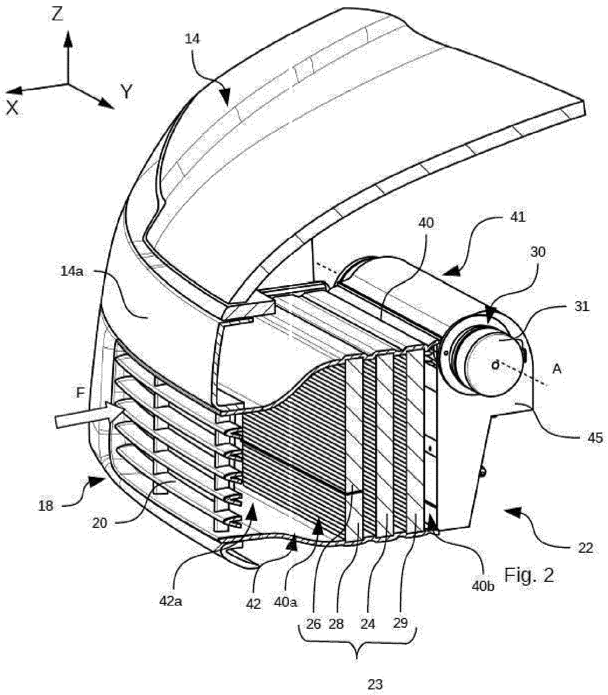

Sur les figures 1 et 2, est représenté un trièdre XYZ afin de définir l'orientation des différents éléments les uns des autres. Une première direction, notée X, correspond à une direction longitudinale du véhicule. Elle correspond également à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Dans la présente description, on entend par « bas » ou « basse » la position d'un élément par rapport à un autre selon la direction Z déterminée ci-dessus.

Sur les figures 1 et 2, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve de préférence en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

Comme le montre la figure 2 le module de refroidissement 22 est destiné à être traversé par un flux d'air F parallèle à la direction X et allant de l'avant vers l'arrière du véhicule 10. Le module de refroidissement 22 comprend un ensemble d'échangeurs de chaleur 23. Cet ensemble d'échangeurs de chaleur 23 comporte au moins un premier échangeur de chaleur 24, un deuxième échangeur de chaleur 26 et un troisième échangeur de chaleur 28.

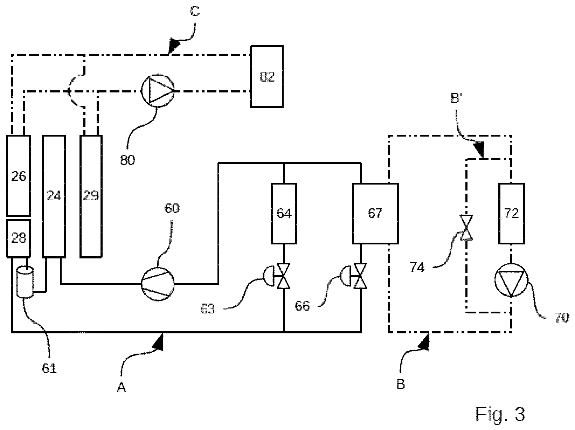

Le premier échangeur de chaleur 24 est notamment configuré pour dissiper de l'énergie calorifique dans le flux d'air F. Ce premier échangeur de chaleur 24 peut plus particulièrement être un condenseur d'un circuit de climatisation A (visible à la figure 3) ou un évapo-condenseur d'un circuit de climatisation réversible A (non représenté) apte à fonctionner dans un mode de refroidissement. Ce circuit de climatisation réversible peut également permettre le refroidissement des batteries du véhicule 10.

Le troisième échangeur de chaleur 28 est quant à lui configuré pour être un sous-refroidisseur connecté au sein du circuit de climatisation A. Ce troisième échangeur de chaleur 28 est ainsi lui aussi configuré pour céder de l'énergie calorifique au flux d'air F, le flux d'air F devant évacuer l'énergie calorifique des échangeurs.

Le deuxième échangeur de chaleur 26 est également configuré pour relâcher de l'énergie calorifique dans le flux d'air F. Ce deuxième échangeur de chaleur 26 peut plus particulièrement être un radiateur connecté à un circuit de gestion thermique C (visible sur la figure 3) d'éléments électriques tel que le moteur électrique 12.

Toujours selon la figure 2, le module de refroidissement 22 comporte essentiellement un boîtier ou carénage 40 formant un canal interne entre deux extrémités 40a, 40b opposées et à l'intérieur duquel est disposé l'ensemble d'échangeurs de chaleur 23. Ce canal interne est de préférence orienté parallèlement à la direction X de sorte que l'extrémité amont 40a est orientée vers l'avant du véhicule 10 en regard de la baie de refroidissement 18 et de sorte que l'extrémité aval 40b est orientée vers l'arrière du véhicule 10.

Le module de refroidissement 22 comporte également un premier boîtier collecteur 41 disposé en aval de l'ensemble d'échangeurs de chaleur 23 dans le sens de circulation du flux d'air. Ce premier boîtier collecteur 41 comporte une sortie 45 du flux d'air F, Ce premier boîtier collecteur 41 permet ainsi de récupérer le flux d'air traversant l'ensemble d'échangeurs de chaleur 23 et d'orienter ce flux d'air vers la sortie 45. Le premier boîtier collecteur 41 peut venir de matière avec le carénage 40 ou bien être une pièce rapportée fixée à l'extrémité aval 40b dudit carénage 40.

Le module de refroidissement 22 comprend également au moins un ventilateur tangentiel, aussi nommé turbomachine tangentielle 30 configuré de sorte à générer le flux d'air F à destination de l'ensemble d'échangeurs de chaleur 23. La turbomachine tangentielle 30 comprend un rotor ou turbine (ou hélice tangentielle) non représentée. La turbine a une forme sensiblement cylindrique. La turbine comporte avantageusement plusieurs étages de pales (ou aubes). La turbine est montée rotative autour d'un axe de rotation A, par exemple parallèle à la direction Y. Le diamètre de la turbine est par exemple compris entre 35 mm et 200 mm pour limiter sa taille. La turbomachine 30 est ainsi compacte.

La turbomachine tangentielle 30 peut également comporter un moteur 31 configuré pour mettre en rotation la turbine. Le moteur 31 est par exemple adapté à entraîner la turbine en rotation, à une vitesse comprise entre 200 tour/min et 14 000 tour/min. Ceci, éventuellement combiné au diamètre de la turbine décrite dans le paragraphe précédent, permet notamment de limiter le bruit généré par la turbomachine tangentielle 30.

La turbomachine tangentielle 30 est de préférence disposée dans le premier boîtier collecteur 41. La turbomachine tangentielle 30 est alors configurée pour aspirer de l'air afin de générer le flux d'air F traversant l'ensemble d'échangeurs de chaleur 23. Le premier boîtier collecteur 41 forme alors une volute au centre de laquelle est disposée la turbine 32 et dont l'évacuation d'air à la sortie 45 du premier boîtier collecteur 41 permet la sortie du flux d'air F.

Dans l'exemple illustré à la figure 2, la turbomachine tangentielle 30 est dans une position haute, notamment dans le tiers supérieur du premier boîtier collecteur 41, de manière préférée dans le quart supérieur du premier boîtier collecteur 41. Ceci permet notamment de protéger la turbomachine tangentielle 30 en cas de submersion et/ou de limiter l'encombrement du module de refroidissement 22 dans sa partie basse.

Il est néanmoins possible d'imaginer que la turbomachine tangentielle 30 soit dans une position basse, notamment dans le tiers inférieur du premier boîtier collecteur 41. Cela permettrait de limiter l'encombrement du module de refroidissement 22 dans sa partie haute. Alternativement, la turbomachine tangentielle 30 peut être dans une position médiane, notamment dans le tiers médian de la hauteur du premier boîtier collecteur 41, par exemple pour des raisons d'intégration du module de refroidissement 22 dans son environnement.

En outre, dans l'exemple illustré à la figure 2, la turbomachine tangentielle 30 fonctionne en aspiration, c'est-à-dire qu'elle aspire l'air ambiant pour qu'il traverse l'ensemble d'échangeurs de chaleur 23. Alternativement, la turbomachine tangentielle 30 peut fonctionner par soufflage, soufflant l'air vers l'ensemble d'échangeurs de chaleur 23. Pour cela, la turbomachine tangentielle 30 sera disposée en amont de l'ensemble d'échangeurs de chaleur 23.

Le module de refroidissement 22 peut également comporter un deuxième boîtier collecteur 42 disposé en amont de l'ensemble d'échangeurs de chaleur 23. Ce deuxième boîtier collecteur 42 comporte une entrée 42a du flux d'air F en provenance de l'extérieur du véhicule 10. L'entrée 42a peut notamment être disposée en regard de la baie de refroidissement 18. Cette entrée 42a peut également comporter la grille 20 de protection. Le deuxième boîtier collecteur 42 peut être formé dans la même matière que le carénage 40 (une seule pièce) ou bien être une pièce rapportée fixée à l'extrémité amont 40a dudit carénage 40.

De plus, l'entrée 42a du deuxième boîtier collecteur 42 peut comporter un dispositif d'obturation de face avant (non représenté) configuré pour permettre au flux d'air F en provenance de l'extérieur du véhicule 10 de passer au travers ladite première entrée 42a dans un état ouvert et obturer ladite première entrée du flux d'air 42a dans un état fermé. Le dispositif d'obturation de face avant peut se présenter sous différentes formes comme par exemple sous la forme d'une pluralité de volets montés pivotants entre une position d'ouverture et une position de fermeture. Les volets peuvent être des volets de type drapeau mais d'autres types de volets comme des volets papillons sont tout à fait envisageables.

La figure 3 montre une représentation schématique du circuit de climatisation A et du circuit de gestion thermique C auxquels sont connectés le premier 24, deuxième 26 et troisième 28 échangeurs de chaleur.

A l'intérieur du circuit de gestion thermique C, représenté en traits pointillés, est destiné à circuler un fluide caloporteur. Le circuit de gestion thermique C peut ainsi comporter le deuxième échangeur de chaleur 26, une pompe 80 et un septième échangeur de chaleur 82 par exemple disposé au niveau d'éléments électriques tel que le moteur électrique 12 et/ou de l'électronique de puissance.

Dans l'exemple illustré aux figures 2 et 3, l'ensemble d'échangeurs de chaleur 23 comporte un quatrième échangeur de chaleur 29 lui aussi configuré pour relâcher de l'énergie calorifique dans le flux d'air. Ce quatrième échangeur de chaleur 29 peut plus particulièrement lui aussi être un radiateur. Dans le mode de réalisation illustré à la figure 3, ce quatrième échangeur de chaleur 29 est connecté au circuit de gestion thermique C en parallèle du deuxième échangeur de chaleur 26. Cependant, il est tout à fait possible d'imaginer un mode de réalisation (non représenté) dans lequel le quatrième échangeur de chaleur 29 est connecté à un autre circuit de gestion thermique dédié par exemple au refroidissement de l'électronique de puissance.

Sur la figure 3, le circuit de climatisation A est représenté en traits pleins. Au sein de ce circuit de climatisation est destiné à circuler un fluide réfrigérant. Le circuit de climatisation A comporte dans le sens de circulation du fluide réfrigérant, un compresseur 60 et le premier échangeur de chaleur 24, configuré pour être un condenseur destiné à être traversé par le flux d'air F. En aval du premier échangeur de chaleur 24, le circuit de climatisation A comporte le troisième échangeur de chaleur 28 configuré pour être un sous-refroidisseur. En aval du troisième échangeur de chaleur 28, le circuit de climatisation A comporte un premier dispositif de détente 63 et un évaporateur 64 destiné à être traversé par exemple par un flux d'air à destination de l'habitacle.

Entre le premier 24 et le troisième 28 échangeur de chaleur, le circuit de climatisation A peut comporter une bouteille déshydratante 61. Cette bouteille déshydratante 61 est notamment connectée au sein du circuit de climatisation A en aval du premier échangeur de chaleur 24, entre ledit premier échangeur de chaleur 24 et le troisième échangeur de chaleur 28, dans le sens de circulation du fluide réfrigérant circulant dans ledit circuit de climatisation A.

Le circuit de climatisation A peut comporter un deuxième dispositif de détente 66 et un cinquième échangeur de chaleur 67 afin de refroidir les batteries. Le deuxième dispositif de détente 66 et le cinquième échangeur de chaleur 67 sont disposés en parallèle du premier dispositif de détente 63 et de l'évaporateur 64. Le cinquième échangeur de chaleur 67 peut être un évaporateur pour un refroidissement direct des batteries ou bien, comme illustré à la figure 3, un échangeur de chaleur bi-fluide agencé conjointement sur une boucle annexe B pour un refroidissement indirect des batteries.

Cette boucle annexe B peut notamment comporter une pompe 70 et un sixième échangeur de chaleur 72, par exemple une plaque froide, au contact des batteries. La boucle annexe B peut également comporter une dérivation B' de contournement du cinquième échangeur de chaleur 67 afin par exemple de réaliser une homogénéisation de la température des batteries.

Le troisième échangeur de chaleur 28 est disposé au sein de l'ensemble d'échangeurs de chaleur 23 et est le plus en amont dans le sens du flux d'air F. Cela permet à ce dernier de bénéficier de l'air à la plus basse température (« air le plus frais ») du flux d'air F. Le troisième échangeur de chaleur 28 peut ainsi assurer sa fonction de sous-refroidissement du fluide réfrigérant circulant dans le circuit de climatisation A efficacement. La performance thermique, ou encore efficacité thermique du circuit de climatisation A est ainsi élevé et sa puissance de refroidissement est suffisante pour par exemple assurer à la fois le refroidissement d'un flux d'air à destination de l'habitacle et le refroidissement des batteries.

Selon un premier mode de réalisation de l'ensemble d'échangeurs de chaleur 23, illustré aux figures 2 à 6, le deuxième échangeur de chaleur 26 est disposé en amont du premier échangeur de chaleur 24 dans le flux d'air F, au sein de l'ensemble d'échangeurs de chaleur 23. Plus particulièrement, le deuxième échangeur de chaleur 26 et le troisième échangeur de chaleur 28 sont disposés sur un même plan au sein de l'ensemble d'échangeurs de chaleur 23. Cela permet ainsi au deuxième 26 et au troisième 28 échangeur de chaleur d'être tout deux les plus en amont dans le sens de circulation du flux d'air F. Ainsi à la fois le deuxième 26 et le troisième 28 échangeur de chaleur bénéficient de l'air le plus « frais » afin de dissiper de l'énergie calorifique le plus efficacement possible.

Selon ce premier mode de réalisation, la hauteur cumulée du deuxième 26 et du troisième 28 échangeur de chaleur est sensiblement égale à celle du premier échangeur de chaleur 24. Cela permet ainsi de conserver un ensemble d'échangeurs de chaleur 23 dans lequel chaque couche ou strate d'échangeur de chaleur à des dimensions similaires. Cela permet également de limiter le nombre d'échangeurs de chaleur que le flux d'air F traverse et donc cela limite les pertes de charge. Il est ainsi par exemple possible d'ajouter le quatrième échangeur de chaleur 29 en aval du premier échangeur de chaleur 24.

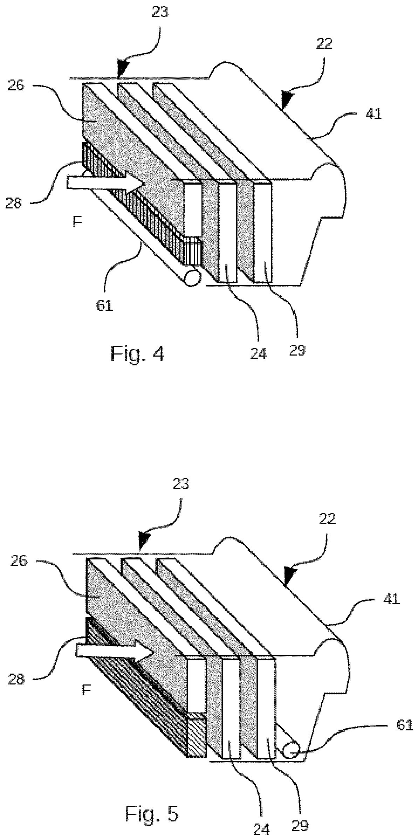

De préférence, selon ce premier mode de réalisation, le troisième échangeur de chaleur 28 est disposé sous le deuxième échangeur de chaleur 26. Par « disposé sous » on entend ici qu'à l'état monté au sein du véhicule automobile 10, le troisième échangeur de chaleur 28 est situé au plus près du sol par rapport au deuxième échangeur de chaleur 26. Les échangeurs de chaleur 26 et 28 sont donc installés l'un sous l'autre dans une direction z. Selon une première variante, illustrée à la figure 4, la bouteille déshydratante 61 peut être disposée sur un même plan que le troisième échangeur de chaleur 28 au sein de l'ensemble d'échangeurs de chaleur 23. Plus précisément, la bouteille déshydratante 61 est disposée sous le troisième échangeur de chaleur 28. Ainsi, selon cette variante du premier mode de réalisation, la bouteille déshydratante 61 est dans le même plan qu'à la fois le deuxième 26 et le troisième 28 échangeur de chaleur. Dans cette variante, la hauteur cumulée du deuxième 26, du troisième 28 échangeur de chaleur et de la bouteille déshydratante 61 est sensiblement égale à celle du premier échangeur de chaleur 24.

Selon une deuxième variante, illustrée à la figure 5, la bouteille déshydratante 61 peut être disposée en aval de l'ensemble d'échangeurs de chaleur 23 au sein du premier boîtier collecteur 41. Plus particulièrement, la bouteille déshydratante 61 est disposée dans la partie basse du premier boîtier collecteur 41.

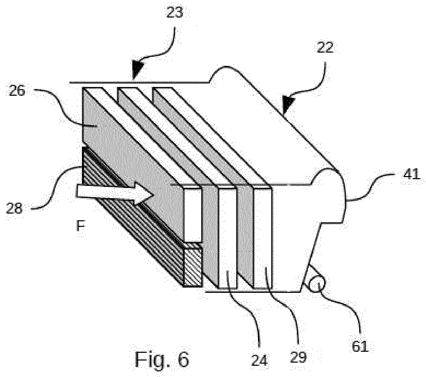

Selon une troisième variante, illustrée à la figure 6, la bouteille déshydratante 61 peut être disposée en aval de l'ensemble d'échangeurs de chaleur 23 à l'extérieur dudit premier boîtier collecteur 41. De même, la bouteille déshydratante 61 est de préférence disposée dans la partie basse du premier boîtier collecteur 41.

Les deuxième et troisième variantes permettent notamment d'avoir une hauteur du deuxième 26 et troisième 28 échangeur de chaleur ne soit pas amputée de celle de la bouteille déshydratante 61 pour une surface d'échange plus importante.

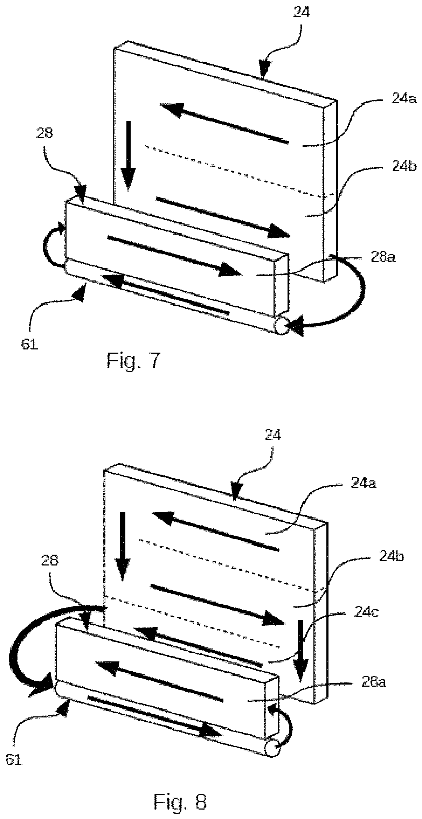

Comme le montrent les figures 4 à 6, selon n'importe laquelle des variantes citées ci-dessus, la bouteille déshydratante 61 est positionnée de sorte que son axe d'élongation est disposé parallèlement au plan des échangeurs de chaleur 24, 26, 28, 29 de l'ensemble d'échangeurs de chaleur 23. Plus précisément, la bouteille déshydratante 61 est disposée de sorte que son axe d'élongation soit sensiblement perpendiculaire à l'axe de la hauteur des échangeurs de chaleur 24, 26, 28, 29 de l'ensemble d'échangeurs de chaleur 23. Toujours selon ce premier mode de réalisation et comme illustré par la figure 7 et 8, le troisième échangeur de chaleur 28 peut notamment être configuré pour permettre une passe 28a du fluide réfrigérant circulant dans le circuit de climatisation A. Selon un premier exemple illustré à la figure 7, le fluide réfrigérant circule dans cette passe 28a à contre-courant par rapport à dans une passe 24a, 24b, disposée en vis-à-vis, au sein du premier échangeur de chaleur 24. Le premier échangeur de chaleur 24 peut ainsi par exemple comporter deux passes 24a, 24b et le troisième échangeur de chaleur une seule passe 28a . Le troisième échangeur de chaleur 28 est alors disposé en vis-à-vis de la passe 24b la plus basse, de sorte que le sens de circulation du fluide caloporteur dans la passe 24a du premier échangeur de chaleur 24 soit à contre-courant du sens de circulation du fluide caloporteur dans la passe 28a du troisième échangeur de chaleur 24.

Comme le montre la figure 7, au niveau du premier échangeur de chaleur 24, le fluide réfrigérant traverse une première passe d'entrée 24a, et rejoint une deuxième passe de sortie 24b dans laquelle le fluide réfrigérant circule à contre-courant. L'entrée et la sortie du fluide réfrigérant dans le premier échangeur de chaleur 24 s'effectue alors du même côté dudit premier échangeur de chaleur 24. Le fluide réfrigérant passe ensuite dans la bouteille déshydratante 61 qu'il traverse. L'entrée de fluide réfrigérant de la bouteille déshydratante 61 est disposé du même côté que la sortie de fluide réfrigérant du premier échangeur de chaleur 24. La sortie de fluide réfrigérant de la bouteille déshydratante 61 est disposée à l'opposé de son entrée. Le fluide réfrigérant passe ensuite dans le troisième échangeur de chaleur 28 ne comportant qu'une passe 28a. L'entrée de fluide réfrigérant du troisième échangeur de chaleur 28 est du même côté que la sortie de la bouteille déshydratante 61 et la sortie de fluide réfrigérant du troisième échangeur de chaleur 28 est du même côté que les entrée et sortie du premier échangeur de chaleur 24. Cela permet par exemple de faciliter les raccordements sur les différents échangeurs de chaleur 24 28. Selon un deuxième exemple illustré par la figure 8, le fluide réfrigérant circule dans la passe 28a dans le même sens que dans une passe 24a, 24b, disposée en vis-à-vis, au sein du premier échangeur de chaleur 24. Le premier échangeur de chaleur 24 peut ainsi par exemple comporter trois passes 24a, 24b, 24c et le troisième échangeur de chaleur une seule passe 28a. Le troisième échangeur de chaleur 28 est alors disposé en vis-à-vis de la passe 24c la plus basse, de sorte que le sens de circulation du fluide caloporteur dans la passe 24a du premier échangeur de chaleur 24 soit à de sens opposé au sens de circulation du fluide caloporteur dans la passe 28a du troisième échangeur de chaleur 24.

Comme le montre la figure 8, au niveau du premier échangeur de chaleur 24, le fluide réfrigérant traverse une première passe d'entrée 24a, et rejoint une deuxième passe de sortie 24b dans laquelle le fluide réfrigérant circule à contre-courant de la première passe 24a. Le fluide réfrigérant passe ensuite dans une troisième passe 24c au sein du premier échangeur de chaleur dans laquelle le fluide réfrigérant circule à contre-courant de la deuxième passe 24b. L'entrée du fluide réfrigérant dans le premier échangeur de chaleur 24 s'effectue sur le côté dudit premier échangeur de chaleur 24 opposé à sa sortie. Le fluide réfrigérant passe ensuite dans la bouteille déshydratante 61 qu'il traverse. L'entrée de fluide réfrigérant de la bouteille déshydratante 61 est disposé du même côté que la sortie de fluide réfrigérant du premier échangeur de chaleur 24. La sortie de fluide réfrigérant de la bouteille déshydratante 61 est disposée à l'opposé de son entrée. Le fluide réfrigérant passe ensuite dans le troisième échangeur de chaleur 28 ne comportant qu'une passe 28a. L'entrée de fluide réfrigérant du troisième échangeur de chaleur 28 est du même côté que la sortie de la bouteille déshydratante 61 et la sortie de fluide réfrigérant du troisième échangeur de chaleur 28 sur un côté opposé de l'entrée du premier échangeur de chaleur 24.

Ces deux exemples des figures 7 et 8 permettent notamment d'éviter les croisements de branchements d'un côté à l'autre des échangeurs de chaleur 24 28 et de la bouteille déshydratante 61.

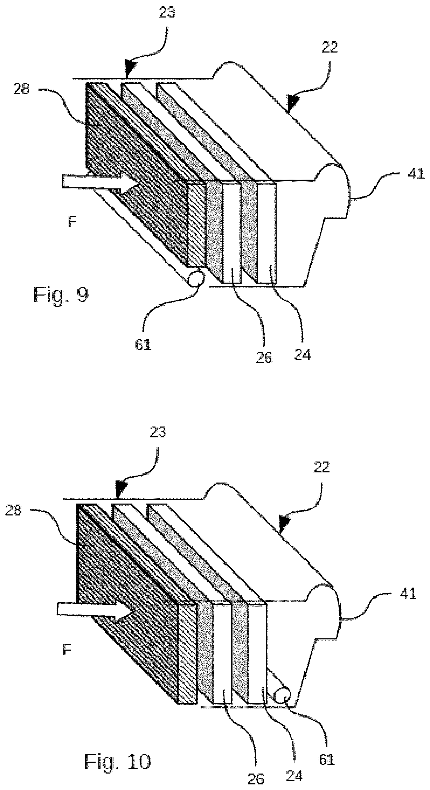

Selon un deuxième mode de réalisation ne faisant pas partie de l'invention, et illustré aux figures 9 à 11, le troisième échangeur de chaleur 28 peut être disposé en amont du deuxième échangeur de chaleur 26. Dans ce cas, seul le troisième échangeur de chaleur 28 est le plus en amont dans le sens de circulation du flux d'air F et bénéficie de l'air le plus « frais » afin de dissiper de l'énergie calorifique.

Selon ce deuxième mode de réalisation, ne faisant pas partie de l'invention, la hauteur du troisième 28 échangeur de chaleur est sensiblement égale à celle du premier échangeur de chaleur 24. Cela permet ainsi de conserver un ensemble d'échangeurs de chaleur 23 dans lequel chaque couche ou strate d'échangeurs de chaleur a des dimensions similaires. Afin, de limiter le nombre d'échangeurs de chaleur que le flux d'air traverse et donc limiter les pertes de charges, il est ainsi préférable de ne pas ajouter le quatrième échangeur de chaleur 29.

La bouteille déshydratante 61 peut être positionnée, comme pour le premier mode de réalisation, de sorte que son axe d'élongation est disposé parallèlement au plan des échangeurs de chaleur 24, 26, 28, 29 de l'ensemble d'échangeurs de chaleur 23. Plus précisément, la bouteille déshydratante 61 est disposée de sorte que son axe d'élongation soit perpendiculaire à l'axe de la hauteur des échangeurs de chaleur 24, 26, 28, 29 de l'ensemble d'échangeurs de chaleur 23.

La bouteille déshydratante 61 peut également être disposée selon 3 variantes. Selon une première variante, illustrée à la figure 9, la bouteille déshydratante 61 peut être disposée sur un même plan que le troisième échangeur de chaleur 28 au sein de l'ensemble d'échangeurs de chaleur 23. Plus précisément, la bouteille déshydratante 61 est disposée sous le troisième échangeur de chaleur 28. Dans cette variante, la hauteur cumulée du troisième 28 échangeur de chaleur et de la bouteille déshydratante 61 est sensiblement égale à celle du premier échangeur de chaleur 24.

Selon une deuxième variante, illustrée à la figure 10, la bouteille déshydratante 61 peut être disposée en aval de l'ensemble d'échangeurs de chaleur 23 au sein du premier boîtier collecteur 41. Plus particulièrement, la bouteille déshydratante 61 est disposée dans la partie basse du premier boîtier collecteur 41.

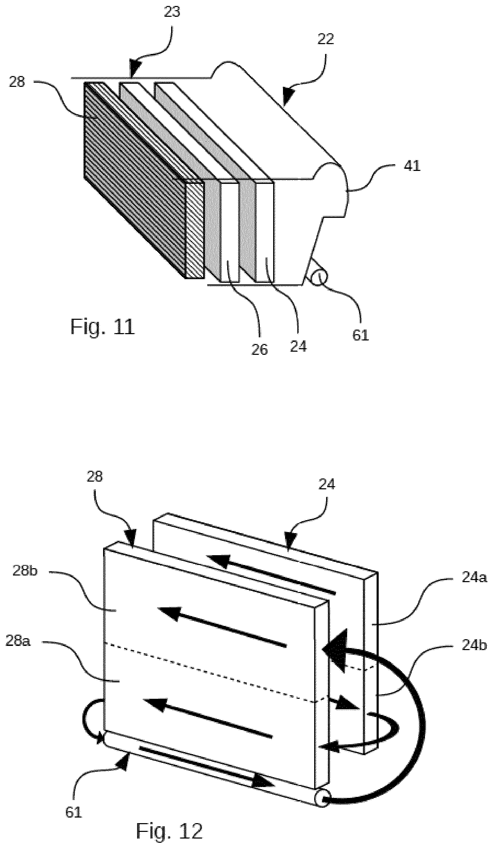

Selon une troisième variante, illustrée à la figure 11, la bouteille déshydratante 61 peut être disposée en aval de l'ensemble d'échangeurs de chaleur 23 à l'extérieur dudit premier boîtier collecteur 41. De même, la bouteille déshydratante 61 est de préférence disposée dans la partie basse du premier boîtier collecteur 41.

Les deuxième et troisième variantes permettent notamment d'avoir une hauteur du troisième 28 échangeur de chaleur qui n'est pas amputée de celle de la bouteille déshydratante 61 pour une surface d'échange plus importante.

Le fait que seul le troisième échangeur de chaleur 28 est le plus en amont dans le sens de circulation du flux d'air F permet à ce dernier d'avoir une dimension suffisante pour avoir plus d'une passe 28a, 28b de circulation de fluide réfrigérant. Comme le montre la figure 12, au niveau du premier échangeur de chaleur 24, le fluide réfrigérant traverse une première passe d'entrée 24a, et rejoint une deuxième passe de sortie 24b dans laquelle le fluide réfrigérant circule à contre-courant. L'entrée et la sortie du fluide réfrigérant dans le premier échangeur de chaleur 24 s'effectue alors du même côté dudit premier échangeur de chaleur 24. Le fluide réfrigérant passe ensuite dans une première passe 28a du troisième échangeur de chaleur 28. Cette première passe est notamment disposée en vis-à-vis de la deuxième passe 24b du premier échangeur de chaleur 24. L'entre de fluide réfrigérant de cette première passe 28a du troisième échangeur de chaleur 28 est disposée du même côté que la sortie de fluide réfrigérant de la deuxième passe 24b du premier échangeur de chaleur 24. Le fluide réfrigérant ressort du troisième échangeur de chaleur 28 et plus précisément de sa première passe 28a à l'opposé de son entrée. Le fluide réfrigérant passe ensuite dans la bouteille déshydratante 61 qu'il traverse. L'entrée de fluide réfrigérant de la bouteille déshydratante 61 est disposé du même côté que la sortie de fluide réfrigérant de la sortie de fluide réfrigérant de la première passe 28a du troisième échangeur de chaleur 28. La sortie de fluide réfrigérant de la bouteille déshydratante 61 est disposée à l'opposé de son entrée. Le fluide réfrigérant passe ensuite dans une deuxième passe 28b du troisième échangeur de chaleur 28. L'entrée de fluide réfrigérant de la deuxième passe 28b du troisième échangeur de chaleur 28 est du même côté que la sortie de la bouteille déshydratante 61 et la sortie de fluide réfrigérant de la deuxième passe 28b du troisième échangeur de chaleur 28 est du côté opposé aux entrée et sortie du premier échangeur de chaleur 24. Les première 28a et deuxième 28b passes du troisième échangeur de chaleur 28 sont particulièrement disposées l'une au-dessus de l'autre, la première passe 28a étant celle disposée en bas du troisième échangeur de chaleur 28. Le fluide réfrigérant circule dans le même sens au sein des première 28a et deuxième 28b passes du troisième échangeur de chaleur 28.

Comme pour les deux exemples des figures 7 et 8, cet exemple de la figure 12 permet d'éviter les croisements de branchements d'un côté à l'autre des échangeurs de chaleur 24 28 et de la bouteille déshydratante 61.

Ainsi, on voit bien que du fait de positionner le plus en avant le troisième échangeur de chaleur 28 de sous-refroidissement permet d'améliorer les performances du circuit de climatisation A et ce dans le cadre d'un module de refroidissement 22 étudié et adapté pour des véhicules électriques et hybrides.

## Revendications

1. Module de refroidissement (22) pour véhicule automobile (10) électrique ou hybride, ledit module de refroidissement (22) étant destiné à être traversé par un flux d'air (F) et comportant :
□ un ensemble d'échangeurs de chaleur (23) comportant :
• un premier échangeur de chaleur (24) configuré pour être un condenseur connecté au sein d'un circuit de climatisation (A), et
• un deuxième échangeur de chaleur (26) configuré pour être un radiateur basse température connecté au sein d'un circuit de gestion thermique (C),
□ une turbomachine tangentielle (30) configurée de sorte à générer le flux d'air (F),
**caractérisé en ce que** l'ensemble d'échangeurs de chaleur (23) comporte en outre un troisième échangeur de chaleur (28) configuré pour être un sous-refroidisseur connecté au sein du circuit de climatisation (A), ledit troisième échangeur de chaleur (28) étant disposé au sein de l'ensemble d'échangeurs de chaleur (23) le plus en amont dans le sens du flux d'air (F), le deuxième échangeur de chaleur (26) étant disposé en amont du premier échangeur de chaleur (24) dans le flux d'air (F) au sein de l'ensemble d'échangeurs de chaleur (23), le deuxième échangeur de chaleur (26) et le troisième échangeur de chaleur (28) étant disposés sur un même plan au sein de l'ensemble d'échangeurs de chaleur (23).

2. Module de refroidissement (22) selon la revendication précédente, **caractérisé en ce que** le troisième échangeur de chaleur (28) est disposé sous le deuxième échangeur de chaleur (26).

3. Module de refroidissement (22) selon l'une quelconque des revendications précédentes, **caractérisé en ce que** l'ensemble d'échangeurs de chaleur (23) comporte un quatrième échangeur de chaleur (29) configuré pour être un radiateur basse température et disposé en aval du premier échangeur de chaleur (24) dans le flux d'air (F).

4. Module de refroidissement (22) selon la revendication 3, **caractérisé en ce que** le quatrième échangeur de chaleur (29) est connecté au circuit de gestion thermique (B) en parallèle du deuxième échangeur de chaleur (26).

5. Module de refroidissement (22) selon la revendication 3, **caractérisé en ce que** le quatrième échangeur de chaleur (29) est connecté à un circuit de gestion thermique annexe distinct du circuit de gestion thermique (C) auquel est connecté le deuxième échangeur de chaleur (26).

6. Module de refroidissement (22) selon l'une quelconque des revendications précédentes, **caractérisé en ce qu'**il comporte une bouteille déshydratante (61), ladite bouteille déshydratante (61) étant connectée au sein du circuit de climatisation (A) en aval du premier échangeur de chaleur (24), entre ledit premier échangeur de chaleur (24) et le troisième échangeur de chaleur (28), dans le sens de circulation d'un fluide réfrigérant circulant dans ledit circuit de climatisation (A).

## Patentansprüche

1. Kühlmodul (22) für ein elektrisches oder hybrides Kraftfahrzeug (10), wobei das Kühlmodul (22) dazu bestimmt ist, von einem Luftstrom (F) durchströmt zu werden und umfassend:
- eine Anordnung von Wärmetauschern (23), umfassend:
- einen ersten Wärmetauscher (24), der als Kondensator konfiguriert ist, der innerhalb eines Klimaanlagenkreislaufs (A) angeschlossen ist, und
- einen zweiten Wärmetauscher (26), der als Niedertemperaturkühler konfiguriert ist, der innerhalb eines Thermomanagementkreislaufs (C) angeschlossen ist,
- eine Tangentiallüfter (30), die so konfiguriert ist, dass sie den Luftstrom (F) erzeugt,
**dadurch gekennzeichnet, dass** die Anordnung von Wärmetauschern (23) ferner einen dritten Wärmetauscher (28) umfasst, der als Unterkühler konfiguriert ist, der innerhalb des Klimaanlagenkreislaufs (A) angeschlossen ist, wobei der dritte Wärmetauscher (28) innerhalb der Anordnung von Wärmetauschern (23) am weitesten stromaufwärts in Richtung des Luftstroms (F) angeordnet ist, wobei der zweite Wärmetauscher (26) stromaufwärts des ersten Wärmetauschers (24) im Luftstrom (F) innerhalb der Anordnung von Wärmetauschern (23) angeordnet ist, wobei der zweite Wärmetauscher (26) und der dritte Wärmetauscher (28) auf einer gleichen Ebene innerhalb der Anordnung von Wärmetauschern (23) angeordnet sind.

2. Kühlmodul (22) nach dem vorhergehenden Anspruch, **dadurch gekennzeichnet, dass** der dritte Wärmetauscher (28) unter dem zweiten Wärmetauscher (26) angeordnet ist.

3. Kühlmodul (22) nach einem der vorhergehenden Ansprüche, **dadurch gekennzeichnet, dass** die Anordnung von Wärmetauschern (23) einen vierten Wärmetauscher (29) umfasst, der als Niedertemperaturkühler konfiguriert ist und stromabwärts des ersten Wärmetauschers (24) im Luftstrom (F) angeordnet ist.

4. Kühlmodul (22) nach Anspruch 3, **dadurch gekennzeichnet, dass** der vierte Wärmetauscher (29) parallel zum zweiten Wärmetauscher (26) an den Thermomanagementkreislauf (B) angeschlossen ist.

5. Kühlmodul (22) nach Anspruch 3, **dadurch gekennzeichnet, dass** der vierte Wärmetauscher (29) an einen separaten Thermomanagementkreislauf angeschlossen ist, der sich von dem Thermomanagementkreislauf (C) unterscheidet, an den der zweite Wärmetauscher (26) angeschlossen ist.

6. Kühlmodul (22) nach einem der vorhergehenden Ansprüche, **dadurch gekennzeichnet, dass** es eine Trockenflasche (61) umfasst, wobei die Trockenflasche (61) innerhalb des Klimaanlagenkreislaufs (A) stromabwärts des ersten Wärmetauschers (24), zwischen dem ersten Wärmetauscher (24) und dem dritten Wärmetauscher (28), in Strömungsrichtung eines Kältemittels, das in dem Klimaanlagenkreislauf (A) zirkuliert, angeschlossen ist.

## Claims

1. Cooling module (22) for an electric or hybrid motor vehicle (10), said cooling module (22) being intended to be traversed by an air flow (F) and comprising:
- a set of heat exchangers (23) comprising:
- a first heat exchanger (24) configured to be a condenser connected within an air conditioning circuit (A), and
- a second heat exchanger (26) configured to be a low temperature radiator connected within a thermal management circuit (C),
- a tangential turbomachine (30) configured to generate the air flow (F),
**characterized in that** the set of heat exchangers (23) further comprises a third heat exchanger (28) configured to be a subcooler connected within the air conditioning circuit (A), said third heat exchanger (28) being arranged within the set of heat exchangers (23) furthest upstream in the direction of the air flow (F), the second heat exchanger (26) being arranged upstream of the first heat exchanger (24) in the air flow (F) within the set of heat exchangers (23), the second heat exchanger (26) and the third heat exchanger (28) being arranged on the same plane within the set of heat exchangers (23).

2. Cooling module (22) according to the preceding claim, **characterized in that** the third heat exchanger (28) is arranged below the second heat exchanger (26).

3. Cooling module (22) according to any one of the preceding claims, **characterized in that** the set of heat exchangers (23) comprises a fourth heat exchanger (29) configured to be a low temperature radiator and arranged downstream of the first heat exchanger (24) in the air flow (F).

4. Cooling module (22) according to claim 3, **characterized in that** the fourth heat exchanger (29) is connected to the thermal management circuit (B) in parallel with the second heat exchanger (26).

5. Cooling module (22) according to claim 3, **characterized in that** the fourth heat exchanger (29) is connected to an auxiliary thermal management circuit distinct from the thermal management circuit (C) to which the second heat exchanger (26) is connected.

6. Cooling module (22) according to any one of the preceding claims, **characterized in that** it comprises a dehydrating bottle (61), said dehydrating bottle (61) being connected within the air conditioning circuit (A) downstream of the first heat exchanger (24), between said first heat exchanger (24) and the third heat exchanger (28), in the direction of circulation of a refrigerant fluid circulating in said air conditioning circuit (A).
